# EUROPEAN PATENT APPLICATION

(11) **EP 4 755 735 A1**
(43) Date of publication of application: **10.06.2026**
(21) Application number: 24848616.9
(22) Date of filing: 23.04.2024
(51) Int. Cl.: B60T 7/04, B60T 7/06

(54) **WORK VEHICLE**

(30) Priority: 02.08.2023 JP 2023126593
(71) Applicant: Kubota Corporation, Osaka 556-8601 (JP)
(72) Inventor: HOYANO, Fumito, Sakai-shi, Osaka 590-0908 (JP); TAKEOKA, Susumu, Sakai-shi, Osaka 590-0908 (JP); FUJIMOTO, Kazutaka, Sakai-shi, Osaka 590-0908 (JP); ISHIHARA, Kazuma, Sakai-shi, Osaka 590-0908 (JP); GONO, Tsuyoshi, Sakai-shi, Osaka 590-0908 (JP); NIHEI, Naoya, Sakai-shi, Osaka 590-0908 (JP); FUKUYAMA, Akito, Sakai-shi, Osaka 590-0908 (JP)
(74) Representative: Müller-Boré & Partner Patentanwälte PartG mbB
(86) International application number: PCT/JP2024/015914
(87) International publication number: WO 2025/027955

(57) **Abstract**

Provided is a working vehicle capable of preventing interference of a plurality of operation mechanisms capable of actuating a brake mechanism.

The working vehicle includes: a brake lever 610 capable of actuating a brake mechanism by being operated in a predetermined direction; a first operation mechanism 620 that couples a brake pedal 22 operable by a rider and the brake lever 610 and is capable of operating the brake lever 610 along with an operation of the brake pedal 22; a second operation mechanism 650 that couples an electric cylinder 640 and the brake lever 610 and is capable of operating the brake lever 610 along with an operation of an electric actuator; and long holes 611a and 623b and pins 623c and 653c that prevent operation of any one of the first operation mechanism 620 and the second operation mechanism 650 along with an operation of the other of the first operation mechanism 620 and the second operation mechanism 650.

## Description

### TECHNICAL FIELD

The present invention relates to a technique of a working vehicle.

### BACKGROUND ART

Conventionally, a technique of a working vehicle including a brake mechanism for braking wheels has been known. For example, Patent Literature 1 discloses such a configuration.

In a tractor described in Patent Literature 1, a brake mechanism is actuated by operation of an operation arm. The operation arm is coupled to a brake pedal that can be depressed by a rider. The brake pedal is connected to an electric actuator, and can be operated by transmission of a driving force of the electric actuator.

The tractor described in Patent Literature 1 is capable of automatic traveling. The tractor can operate the brake pedal by operating the electric actuator during automatic traveling. As a result, the tractor can actuate the brake mechanism by operating the operation arm to make an emergency stop.

However, the tractor disclosed in Patent Literature 1 has poor usability because the brake pedal remains depressed even after the emergency stop.

### CITATION LIST

### PATENT LITERATURE

Patent Literature 1: JP 2019-202613 A

### SUMMARY OF INVENTION

### TECHNICAL PROBLEM

One aspect of the present disclosure has been made in view of the above circumstances, and an object of the present disclosure is to provide a working vehicle capable of preventing interference of a plurality of operation mechanisms capable of actuating a brake mechanism.

### SOLUTION TO PROBLEM

The problem to be solved by one aspect of the present disclosure is as described above, and means for solving the problem will be described below.

One aspect of the present disclosure includes: a brake lever capable of actuating a brake mechanism by being operated in a predetermined direction; a manual operation mechanism that couples a brake operation tool operable by a rider and the brake lever and is capable of operating the brake lever along with an operation of the brake operation tool; an electric operation mechanism that couples an electric actuator and the brake lever and is capable of operating the brake lever along with an operation of the electric actuator; and an independent mechanism that prevents operation of any one of the manual operation mechanism and the electric operation mechanism along with an operation of the other of the manual operation mechanism and the electric operation mechanism.

According to one aspect of the present disclosure, it is possible to prevent interference of a plurality of operation mechanisms capable of actuating a brake mechanism.

In one aspect of the present disclosure, the manual operation mechanism and the electric operation mechanism are connected to the brake lever in parallel.

According to one aspect of the present disclosure, interference between the manual operation mechanism and the electric operation mechanism connected in parallel to the brake lever can be prevented.

In one aspect of the present disclosure, the independent mechanism includes a manual-side long hole formed in any one of a manual-side first member that operates in conjunction with the brake operation tool and a manual-side second member that operates in conjunction with the brake lever, and a manual-side coupling portion provided in the other of the manual-side first member and the manual-side second member and inserted into the manual-side long hole.

According to one aspect of the present disclosure, interference between a plurality of operation mechanisms can be prevented with a simple configuration.

In one aspect of the present disclosure, the independent mechanism includes an electric-side long hole formed in any one of an electric-side first member that operates in conjunction with the electric actuator and an electric-side second member that operates in conjunction with the brake lever, and an electric-side insertion portion provided in the other of the electric-side first member and the electric-side second member and inserted into the electric-side long hole.

According to one aspect of the present disclosure, interference between a plurality of operation mechanisms can be prevented with a simple configuration.

In one aspect of the present disclosure, the independent mechanism includes: a manual-side long hole formed in any one of a manual-side first member that operates in conjunction with the brake operation tool and a manual-side second member that operates in conjunction with the brake lever; a manual-side coupling portion provided in the other of the manual-side first member and the manual-side second member and inserted into the manual-side long hole; an electric-side long hole formed in any one of an electric-side first member that operates in conjunction with the electric actuator and an electric-side second member that operates in conjunction with the brake lever; and an electric-side insertion portion provided in the other of the electric-side first member and the electric-side second member and inserted into the electric-side long hole.

According to one aspect of the present disclosure, interference between a plurality of operation mechanisms can be prevented with a simple configuration.

In one aspect of the present disclosure, a left and right pair of the brake levers are provided so as to correspond to a left and right pair of the brake mechanisms for braking left and right wheels, respectively, and the electric operation mechanism couples one electric actuator and the left and right pair of brake levers.

According to one aspect of the present disclosure, the left and right pair of brake mechanisms can be actuated collectively by one electric actuator.

In one aspect of the present disclosure, the electric operation mechanism includes a rotating member that is rotatable about a rotation axis according to a driving force of the electric actuator, and a distribution portion that distributes and transmits the driving force of the electric actuator transmitted through the rotating member to the left and right pair of brake levers.

According to one aspect of the present disclosure, the operating force and the operating speed of the brake lever by the electric actuator can be adjusted by appropriately setting the shape of the rotating member.

In one aspect of the present disclosure, the electric actuator includes an extendable rod, and an axial direction of the rotation axis is oriented in a direction orthogonal to an extending direction of the rod.

According to one aspect of the present disclosure, since the electric actuator and the rotating member can be directly connected without providing a mechanism for converting the transmission direction of the driving force, the configuration can be simplified.

In one aspect of the present disclosure, a left and right pair of the brake levers are provided so as to correspond to brake mechanisms of left and right wheels, respectively, and two electric operation mechanisms are provided so as to correspond to the left and right pair of brake levers.

According to one aspect of the present disclosure, by controlling the left and right electric actuators separately from each other, the electric operation mechanism can be used as a single-brake mechanism for turning the working vehicle.

### ADVANTAGEOUS EFFECTS OF INVENTION

According to one aspect of the present disclosure, it is possible to prevent interference of a plurality of operation mechanisms capable of actuating a brake mechanism.

### BRIEF DESCRIPTION OF DRAWINGS

Fig. 1 is a side view of a tractor according to an embodiment of the present invention.
Fig. 2 is a side view showing a first operation mechanism and a second operation mechanism.
Fig. 3 is a plan view of the same.
Fig. 4 is a perspective view showing the second operation mechanism.
Fig. 5 is a side view of the same.
Fig. 6 is a plan view of the same.
Fig. 7 is a side view showing a cover member.
Fig. 8 is a side sectional view showing the second operation mechanism.
Fig. 9 is a side view showing a state where a brake pedal is depressed.
Fig. 10 is a side view showing a state where a rod of an electric cylinder is extended.
Fig. 11 is a side sectional view showing a state of adjusting an attachment position of a wire.
Fig. 12 is a side view showing a modification of the second operation mechanism.

### DESCRIPTION OF EMBODIMENT

In the following description, directions indicated by arrows U, D, F, B, L, and R in the drawings are defined as an upward direction, a downward direction, a forward direction, a backward direction, a left direction, and a right direction, respectively.

First, an overall configuration of a tractor 1 according to an embodiment of the present disclosure will be described.

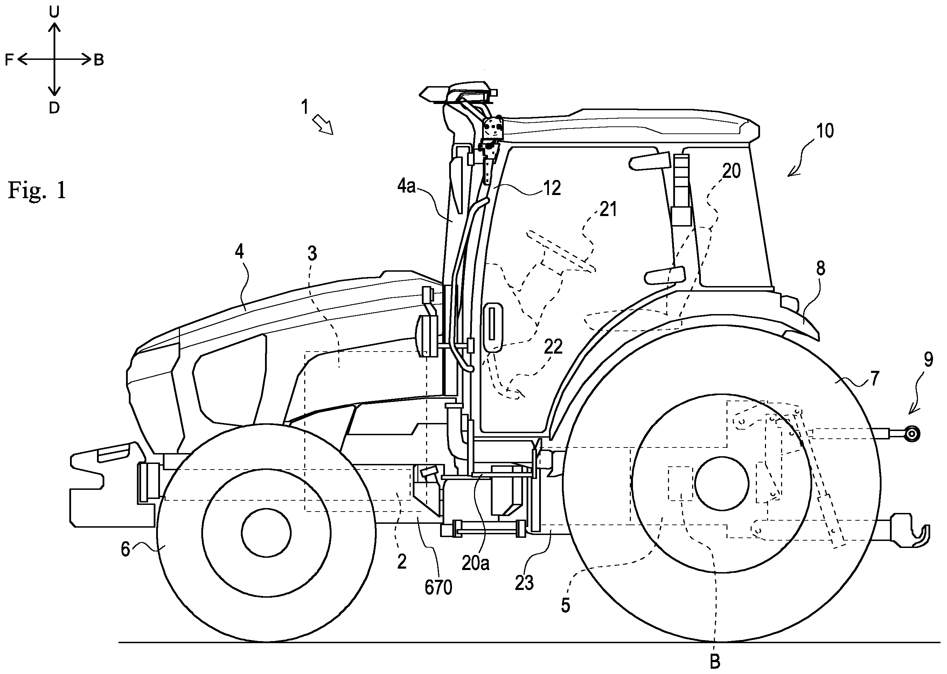

The tractor 1 shown in Fig. 1 mainly includes a body frame 2, an engine 3, a bonnet 4, a transmission case 5, front wheels 6, rear wheels 7, a fender 8, a lifting device 9, a cabin 10, a seat 20, a steering wheel 21, and the like.

The body frame 2 is a frame-shaped member formed by appropriately combining a plurality of panel members. The body frame 2 is formed in a substantially rectangular shape in plan view. The body frame 2 is disposed in a front portion of the tractor 1 with its longitudinal direction oriented in the front-rear direction. The engine 3 is fixed to a rear portion of the body frame 2. The engine 3 is covered with the bonnet 4. The transmission case 5 is fixed behind the engine 3. A muffler 4a that discharges exhaust gas of the engine 3 is disposed on the right side of the bonnet 4. A work lamp and a headlight are provided on a front surface of the bonnet 4. The work lights and the headlights are provided on both left and right sides of the front surface of the bonnet 4 at an interval in the left and right direction.

A front portion of the body frame 2 is supported by the left and right pair of front wheels 6 through a front axle mechanism (not shown). A rear portion of the transmission case 5 is supported by the left and right pair of rear wheels 7 through a rear axle mechanism (not shown). The left and right pair of rear wheels 7 are covered with the fender 8 substantially from above.

The lifting device 9 is provided behind the transmission case 5. Various work devices (e.g., cultivator or the like) can be attached to the lifting device 9. The lifting device 9 can lift and lower the attached work device by an actuator such as a hydraulic cylinder. Power of the engine 3 can be transmitted to the lifting device 9 through a PTO shaft (not shown).

Power of the engine 3 can be shifted by a transmission (not shown) accommodated in the transmission case 5, and then be transmitted to the front wheels 6 through the front axle mechanism, and also be transmitted to the rear wheels 7 through the rear axle mechanism. The front wheels 6 and the rear wheels 7 are rotationally driven by the power of the engine 3, and the tractor 1 can travel. In addition, the work device attached to the lifting device 9 can be driven by the power of the engine 3.

The cabin 10 is provided behind the engine 3. The cabin 10 is placed on a vehicle body (such as transmission case 5). An interior space in which a driver rides is formed inside the cabin 10.

As shown in Fig. 1, a seat 20 on which the driver sits is disposed substantially at the center of the cabin 10. The cabin 10 is provided with an auxiliary step 20a for getting on and off the seat 20. The auxiliary step 20a is installed at least on the left side of the cabin 10. The auxiliary step 20a can be installed on both sides of the cabin 10. The steering wheel 21 for adjusting the turning angle of the front wheels 6 is disposed in a front portion of the cabin 10.

A brake pedal 22 for performing a brake operation is disposed below the steering wheel 21. The rider can apply a braking force corresponding to an operation amount of the brake pedal 22 to the left and right wheels (e.g., rear wheels 7) by depressing the brake pedal 22.

The cabin 10 is provided with a parking brake operating portion (not shown) that can be operated by the rider. The parking brake operating portion is configured by, for example, a switch or the like. The rider can switch between a braking state in which the braking force is applied to the left and right wheels and a brake release state where the braking force is not applied by operating the parking brake operating portion. A fuel tank 23 is disposed below the cabin 10.

The tractor 1 according to the present embodiment is capable of detecting a position of the vehicle body (position information including latitude and longitude) using a GPS or the like, and performing control to automatically steer the vehicle body on the basis of the position information. The above control includes, for example, control for automatically steering the vehicle body so as to travel straight in parallel to a predetermined traveling reference line that has been set, and control for causing the vehicle body to travel automatically along a created target traveling route. Furthermore, the tractor 1 can brake the wheels during automatic traveling.

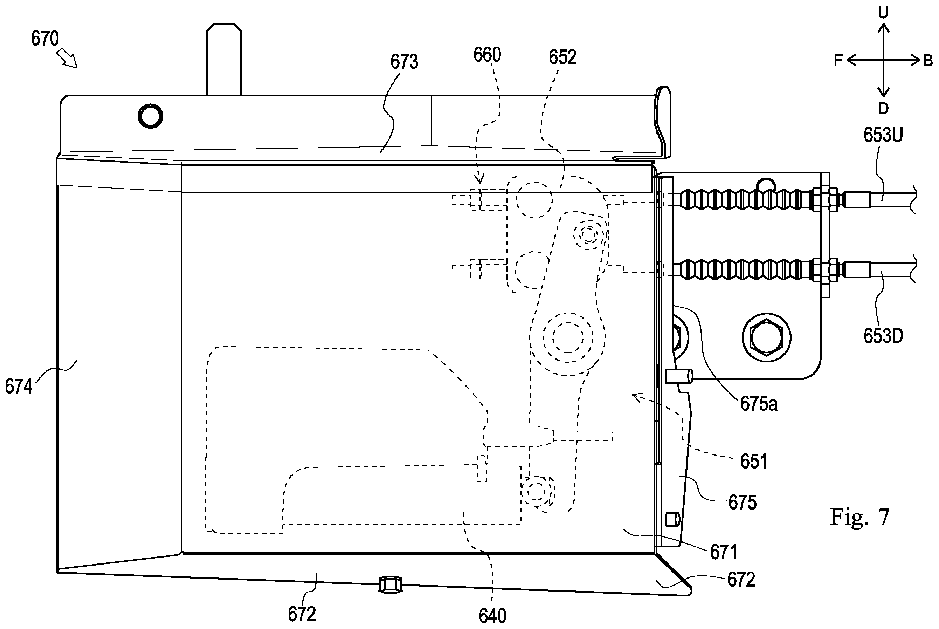

Hereinafter, a configuration related to the brake of the tractor 1 will be described. Specifically, the brake pedal 22, a brake lever 610, a first operation mechanism 620, a support member 630, an electric cylinder 640, a second operation mechanism 650, an adjustment mechanism 660, and a cover member 670 will be described. Note that illustration of the cover member 670 is omitted in the drawings other than Figs. 1 and 7.

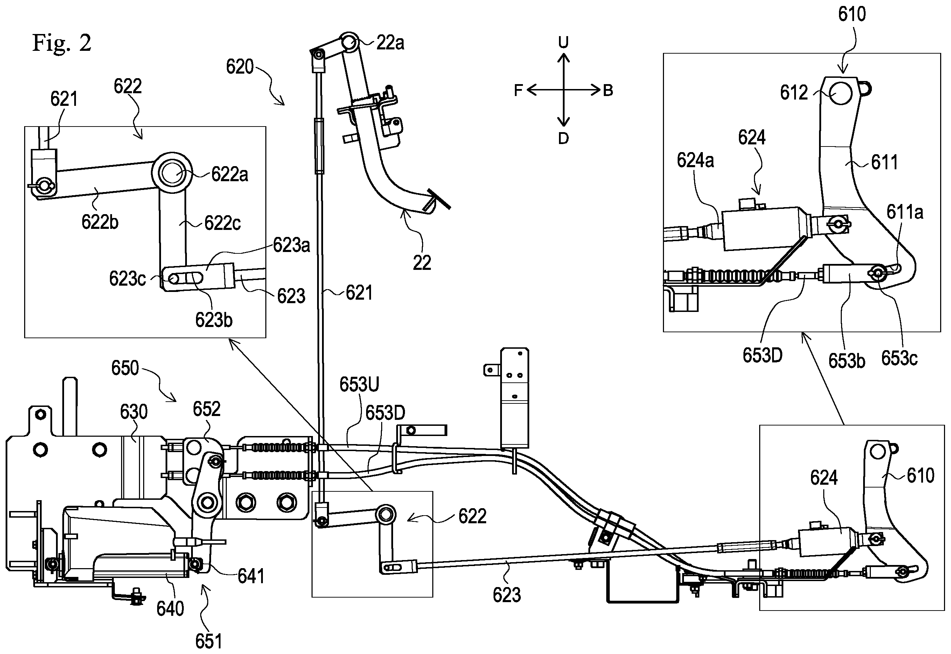

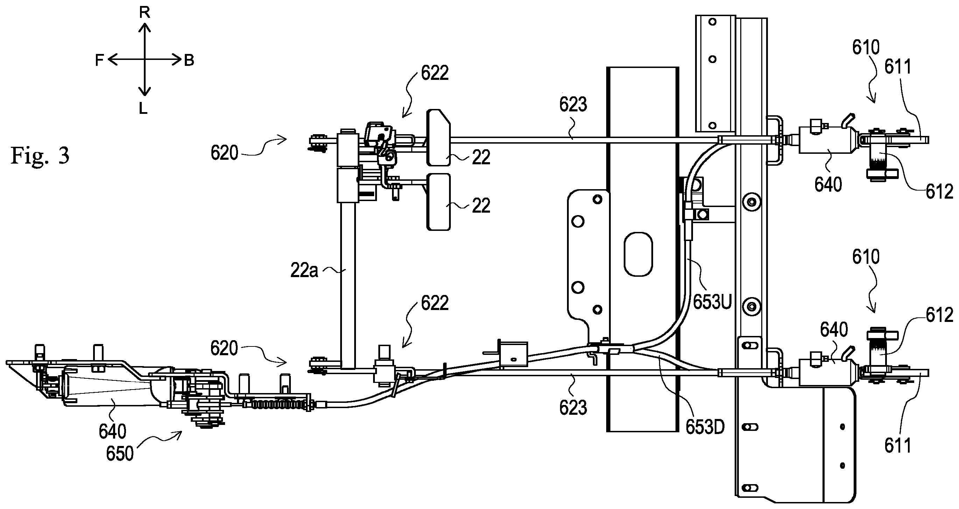

A left and right pair of brake pedals 22 shown in Figs. 2 and 3 is provided. The left and right pair of brake pedals 22 is rockable in the front-rear direction about a rocker shaft 22a whose axial direction is oriented in the left-right direction. The left and right pair of brake pedals 22 are biased rearward by a return spring (not shown). The rider can depress each of the left and right pair of brake pedals 22 separately.

The brake lever 610 actuates a left and right pair of brake mechanisms B (see Fig. 1) to brake the left and right wheels. The brake mechanism B can brake the wheel by pressing a brake pad against a brake disc that rotates integrally with the wheel, for example. Note that the brake mechanism B is not limited to the above-described configuration as long as it can brake the wheel.

A left and right pair of brake levers 610 are provided so as to correspond to the left and right pair of brake mechanisms B. The left brake lever 610 can actuate the left brake mechanism B. The right brake lever 610 can actuate the right brake mechanism B. As shown in Fig. 2, the left and right pair of brake levers 610 include a lever body 611 and an actuation shaft 612.

The lever body 611 is formed in a plate shape with plate surfaces facing the left-right direction. A long hole 611a is formed in the lever body 611. The long hole 611a penetrates the lever body 611 in the left-right direction. The long hole 611a is formed in a substantially arc shape in side view with the actuation shaft 612 as the center.

The actuation shaft 612 is disposed with its axial direction oriented in the left-right direction. The actuation shaft 612 is rotatably supported by the vehicle body. An upper end portion of the lever body 611 is fixed to the actuation shaft 612.

The lever body 611 can rock in the front-rear direction about the actuation shaft 612. The left and right pair of brake levers 610 can actuate the left and right pair of brake mechanisms B to brake the wheels by rotating the actuation shaft 612 along with the forward rocking of the lever body 611. Note that the lever body 611 is biased rearward by a biasing member.

The first operation mechanism 620 operates the brake lever 610 along with the operation of the brake pedal 22. A left and right pair of first operating mechanisms 620 are provided (see Fig. 3). The left first operation mechanism 620 couples the left brake pedal 22 with the left brake lever 610. The right first operation mechanism 620 couples the right brake pedal 22 with the right brake lever 610. Hereinafter, the configuration of the first operation mechanism 620 will be described by taking the left first operation mechanism 620 as an example. As shown in Fig. 2, the first operation mechanism 620 includes a first brake rod 621, a link mechanism 622, a second brake rod 623, and a hydraulic cylinder 624.

The first brake rod 621 is a shaft-shaped member whose longitudinal direction is oriented in the up-down direction. An upper end portion of the first brake rod 621 is coupled to the brake pedal 22.

The link mechanism 622 is for coupling the first brake rod 621 with the second brake rod 623. The link mechanism 622 includes a rocker shaft 622a, a first link member 622b, and a second link member 622c. The rocker shaft 622a is disposed with its axial direction oriented in the left-right direction. The first link member 622b and the second link member 622c are rockably supported by the rocker shaft 622a. A lower end portion of the first brake rod 621 is coupled with the first link member 622b.

The second brake rod 623 is a shaft-shaped member whose longitudinal direction is oriented in the front-rear direction. A front end portion of the second brake rod 623 is coupled with the second link member 622c. More specifically, an attachment portion 623a having plate surfaces facing the left and right is formed in the front end portion of the second brake rod 623, and a pin 623c is inserted into a long hole 623b formed in the attachment portion 623a and the second link member 622c, whereby the front end portion of the second brake rod 623 is coupled with the second link member 622c. The long hole 623b is formed in a linear shape extending along the axial direction of the second brake rod 623.

The hydraulic cylinder 624 automatically actuates the brake mechanism B when the tractor 1 turns, for example. The hydraulic cylinder 624 is disposed such that a rod 624a faces forward. A rear end portion of the second brake rod 623 is coupled with the rod 624a of the hydraulic cylinder 624. The lever body 611 of the brake lever 610 is coupled with a rear end portion of the hydraulic cylinder 624.

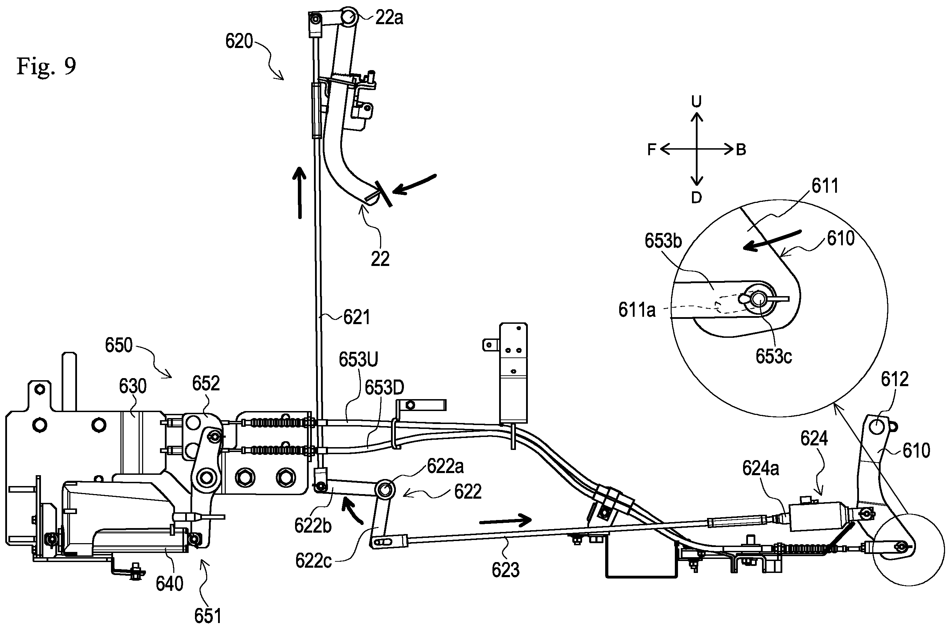

The first operation mechanism 620 transmits an operating force of the brake pedal 22 to the brake lever 610 in response to a depressing operation of the brake pedal 22. Specifically, as shown in Fig. 9, when the brake pedal 22 is depressed, the brake pedal 22 rocks about the rocker shaft 22a. With this rocking, the first link member 622b is pulled upward through the first brake rod 621, and the second brake rod 623 is pulled forward through the second link member 622c.

As a result, the brake lever 610 is rocked forward, the actuation shaft 612 is rotated, and the brake mechanism B is actuated. In this way, the rider can apply a braking force corresponding to the depression amount of the brake pedal 22 to the wheel.

In a case where the tractor 1 is turned, the hydraulic cylinder 624 is controlled to brake wheels positioned inside the turning locus. For example, in a case where the tractor 1 is turned left, the rod 624a of the left hydraulic cylinder 624 is contracted, and the left brake lever 610 is rocked forward. As a result, the left wheel is braked, and the turning diameter of the tractor 1 can be reduced. As described above, the hydraulic cylinder 624 is used as a single-brake mechanism that brakes one of the left and right wheels.

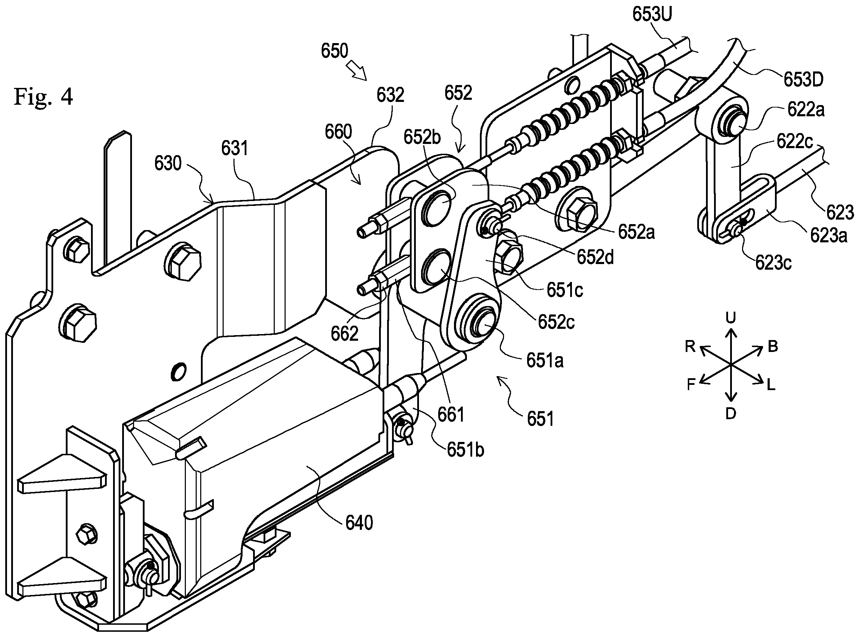

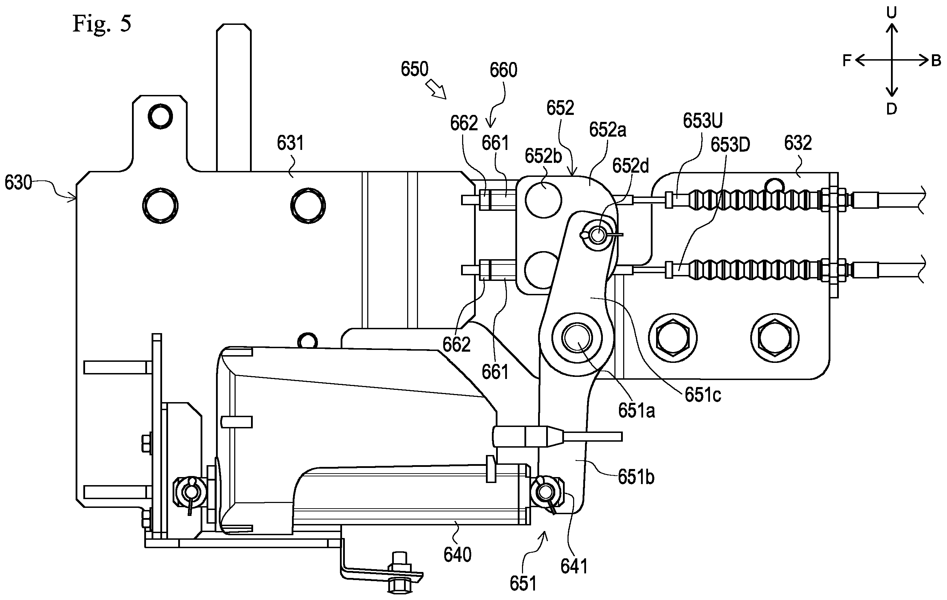

The support member 630 shown in Figs. 4 and 5 is for supporting the electric cylinder 640 and the like. The support member 630 is formed in a substantially plate shape with plate surfaces facing the left-right direction. The support member 630 includes a first member 631 and a second member 632. The first member 631 is fixed to the body frame 2. The second member 632 is disposed on the rear side of the first member 631 and is fixed to the transmission case 5.

The electric cylinder 640 is for operating the left and right pair of brake levers 610. The electric cylinder 640 is supported by the first member 631. The electric cylinder 640 is disposed such that the rod 641 faces rearward. In the present embodiment, one electric cylinder 640 is provided for the left and right pair of brake levers 610 (see Fig. 3). The electric cylinder 640 is operable by electricity fed from a power source (e.g., battery in bonnet 4). An operation signal corresponding to an operation of the parking brake operating portion described above and a control signal during automatic traveling of the tractor 1 are input to the electric cylinder 640. The electric cylinder 640 can expand and contract the rod 641 according to the signal.

The second operation mechanism 650 is for operating the brake lever 610 along with expansion and contraction of the rod 641. The second operation mechanism 650 couples one electric cylinder 640 with the left and right pair of brake levers 610. The second operation mechanism 650 includes a link mechanism 651, an equalizer 652, and wires 653U and 653D.

The link mechanism 651 is for coupling the electric cylinder 640 with the equalizer 652. The link mechanism 651 includes a rotation shaft 651a, a first link member 651b, and a second link member 651c.

The rotation shaft 651a is disposed with its axial direction oriented in the left-right direction (direction orthogonal to extending and contracting direction of rod 641). The rotation shaft 651a is supported by the second member 632 of the support member 630.

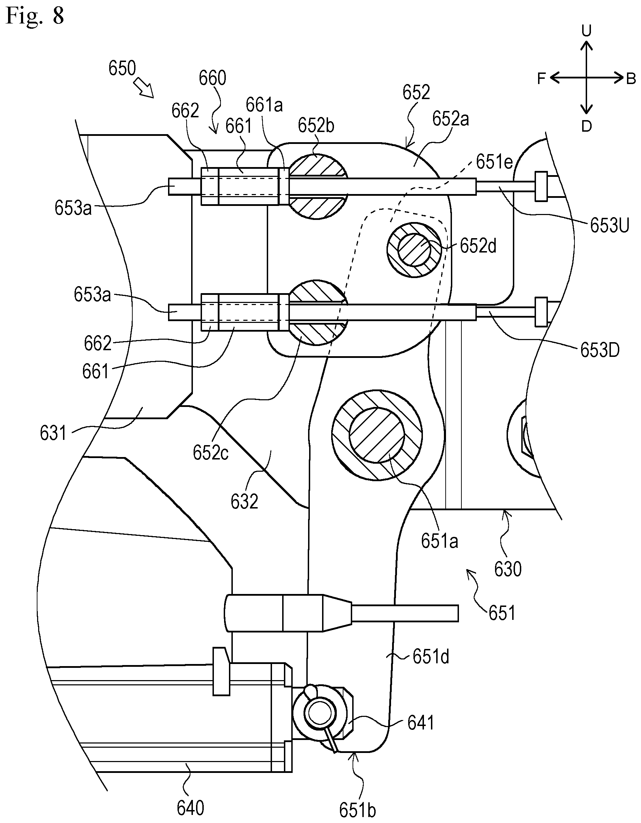

The first link member 651b is formed in a plate shape with plate surfaces facing the left-right direction, and is rotatably supported by the rotation shaft 651a. As shown in Fig. 8, the first link member 651b includes a first extending portion 651d and a second extending portion 651e.

The first extending portion 651d is formed to extend downward from the rotation shaft 651a in side view. The rod 641 of the electric cylinder 640 is coupled with a distal end portion (lower end portion) of the first extending portion 651d. The second extending portion 651e is formed to extend upward from the rotation shaft 651a in side view.

The second link member 651c shown in Figs. 4 and 5 is formed in a plate shape with plate surfaces facing the left-right direction, and is rotatably supported by the rotation shaft 651a. The second link member 651c is formed in the same shape as the second extending portion 651e (see Fig. 8) of the first link member 651b. The second link member 651c is disposed on the left side of the second extending portion 651e.

The equalizer 652 is for distributing and transmitting the thrust of the electric cylinder 640 to the left and right pair of brake levers 610. The equalizer 652 is disposed between the front wheels 6 and the rear wheels 7 shown in Fig. 1 in the front-rear direction. The equalizer 652 is disposed at the front of the fuel tank 23. As shown in Fig. 8, the equalizer 652 includes a main body portion 652a, a first coupling shaft 652b, and a second coupling shaft 652c.

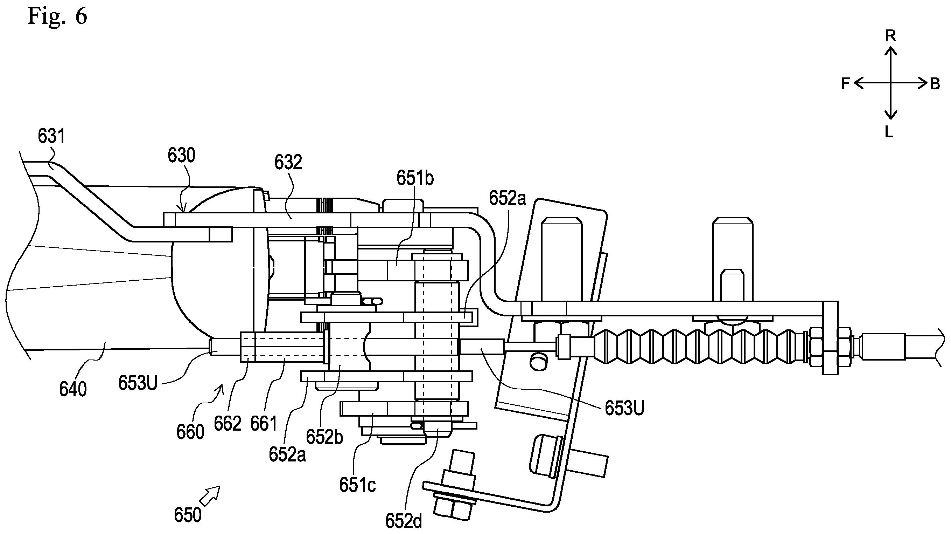

The main body portion 652a is formed in a plate shape with plate surfaces facing the left-right direction. A left and right pair of main body portions 652a are provided. The main body portion 652a is disposed between the first link member 651b and the second link member 651c in the left-right direction (see Figs. 4 and 6). The main body portion 652a, the first link member 651b, and the second link member 651c are coupled with each other by a pin 652d. The main body portion 652a, the first link member 651b, and the second link member 651c can rotate about the rotation shaft 651a along with expansion and contraction of the rod 641 of the electric cylinder 640. The main body portion 652a can rotate relative to the first link member 651b and the like about the pin 652d.

The first coupling shaft 652b is a portion with which an upper wire 653U is coupled. The first coupling shaft 652b is disposed with its axial direction oriented in the left-right direction. The first coupling shaft 652b is supported by the left and right pair of main bodies 652a.

The second coupling shaft 652c is a portion with which a lower wire 653D is coupled. The second coupling shaft 652c is disposed with its axial direction oriented in the left-right direction. The second coupling shaft 652c is supported by the left and right pair of main bodies 652a. The second coupling shaft 652c is disposed below the first coupling shaft 652b.

The wires 653U and 653D shown in Figs. 2, 3, and 8 are for transmitting the thrust of the electric cylinder 640 to the left and right pair of brake levers 610. The wires 653U and 653D connect the equalizer 652 and the left and right pair of brake levers 610. As shown in Fig. 8, the wires 653U and 653D include male screw portions 653a. The male screw portion 653a is formed in front end portions of the wires 653U and 653D. The male screw portion 653a of the wire 653U is inserted into the first coupling shaft 652b. The male screw portion 653a of the wire 653D is inserted into the second coupling shaft 652c. By fastening a nut 662 and the like of the adjustment mechanism 660 described later to the male screw portion 653a, front end portions of the wires 653U and 653D are coupled with the first coupling shaft 652b and the second coupling shaft 652c of the equalizer 652.

As shown in Figs. 2 and 3, rear end portions of the wires 653U and 653D are coupled with the lever bodies 611 of the left and right pair of brake levers 610. More specifically, an attachment portion 653b having plate surfaces facing the left and right is formed in the rear end portions of the wires 653U and 653D, and the rear end portions of the wires 653U and 653D are coupled with the lever bodies 611 by inserting a pin 653c into the attachment portion 653b and the long hole 611a of the lever body 611. In the present embodiment, the upper wire 653U is coupled with the right lever body 611, and the lower wire 653D is coupled with the left lever body 611.

In this manner, the first operation mechanism 620 and the second operation mechanism 650 are connected to the brake lever 610 in parallel. More specifically, the first operation mechanism 620 and the second operation mechanism 650 are directly connected to the brake lever 610 without interposing each other (common member).

The adjustment mechanism 660 shown in Fig. 8 is for adjusting the attachment positions of the wires 653U and 653D with respect to the equalizer 652. The adjustment mechanism 660 is provided in the equalizer 652. The adjustment mechanism 660 includes a high nut 661 and the nut 662.

The high nut 661 is a portion for performing an operation of adjusting attachment positions of the wires 653U and 653D. The high nuts 661 are screwed into the male screw portions 653a of the wires 653U and 653D, respectively. The high nuts 661 are pulled rearward by the wires 653U and 653D, and are brought into contact with the first coupling shaft 652b and the second coupling shaft 652c through washers 661a. Thus, the high nuts 661 are held (attached) by the first coupling shaft 652b and the second coupling shaft 652c. The high nut 661 is disposed so as to protrude forward from an outer edge portion of the main body portion 652a of the equalizer 652.

The nut 662 is for fixing the high nut 661. The nut 662 is screwed to the male screw portion 653a and is disposed on the front side of the high nut 661.

The cover member 670 shown in Fig. 7 is a plate-like member that covers the electric cylinder 640, the link mechanism 651, the equalizer 652, and the adjustment mechanism 660. The cover member 670 is formed in a substantially box shape with an opening on the right side. The cover member 670 includes a side plate portion 671 that covers the left side of the electric cylinder 640 and the like, a bottom portion 672 that covers the lower side, a top portion 673 that covers the upper side, a front plate portion 674 that covers the front side, and a rear plate portion 675 that covers the rear side. A notch 675a through which the wires 653U and 653D can be inserted is formed in the rear plate portion 675.

The cover member 670 is fixed to the support member 630 (see Fig. 5) by a fixing member such as a bolt. Since the electric cylinder 640 and the like are covered with the cover member 670 in this manner, it is possible to prevent mud and the like from adhering to the electric cylinder 640 and the like.

Hereinafter, an operation of the second operation mechanism 650 will be described. In the following, the operation of the second operation mechanism 650 will be described by taking a case where the rod 641 shown in Figs. 2 and 5 is extended as an example. Note that Figs. 2 and 5 show the second operation mechanism 650 in a state where the brake lever 610 is rocked rearward and the wheel is not braked (brake release state).

When the rod 641 shown in Figs. 2 and 5 extends, the first link member 651b, the second link member 651c, and the main body portion 652a of the equalizer 652 rotate about the rotation shaft 651a. As a result, the wires 653U and 653D are pulled forward, and the thrust of the electric cylinder 640 is distributed to the wires 653U and 653D.

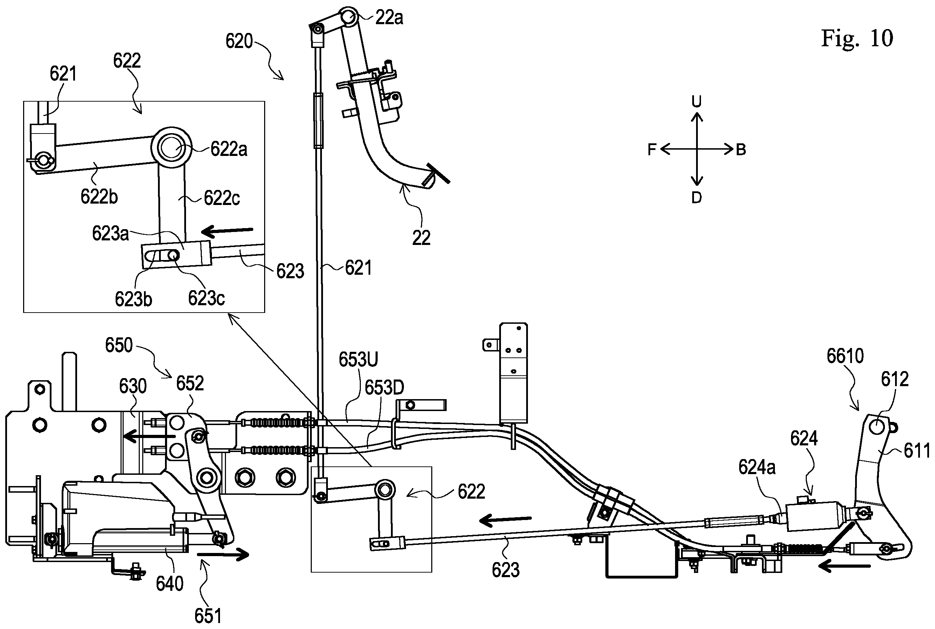

As shown in Fig. 10, when the wires 653U and 653D are pulled, the left and right pair of brake levers 610 are rocked forward, the actuation shaft 612 is rotated, and the left and right pair of brake mechanisms B are actuated. As a result, it is possible to switch to the braking state where the braking force is applied to the left and right wheels.

Note that in a case where the rod 641 of the electric cylinder 640 contracts, the second operation mechanism 650 operates in the opposite manner to when the rod 641 extends. As a result, the second operation mechanism 650 can rock the brake lever 610 rearward and switch to the brake release state where the application of the braking force to the wheel is released.

Here, in the present embodiment, as shown in an enlarged view in Fig. 10, the second brake rod 623 is coupled with the second link member 622c through the long hole 623b and the pin 623c formed in the second brake rod 623. Therefore, in a case where the left and right pair of brake levers 610 are rocked forward by the operation of the electric cylinder 640, the second brake rod 623 is moved forward. However, since the pin 623c inserted into the second link member 622c slides in the long hole 623b of the second brake rod 623, the second link member 622c can be prevented from rotating with the movement of the second brake rod 623. In this manner, transmission of the thrust of the electric cylinder 640 to the brake pedal 22 can be suppressed.

As shown in an enlarged view in Fig. 9, the wires 653U and 653D are coupled with the brake lever 610 through the long hole 611a and the pin 653c formed in the lever body 611. Therefore, when the brake pedal 22 is depressed, the brake lever 610 is rocked forward. However, since the pin 653c inserted into the wires 653U and 653D slides in the long hole 611a of the brake lever 610, the wires 653U and 653D can be prevented from moving forward with the movement of the brake lever 610. In this manner, transmission of the operating force of the brake pedal 22 to the electric cylinder 640 can be suppressed.

As described above, in the present embodiment, the long hole 611a and the pin 653c cut off the transmission of the power from the first operation mechanism 620 to the second operation mechanism 650 (see Fig. 9), and the long hole 623b and the pin 623c cut off the transmission of the power from the second operation mechanism 650 to the first operation mechanism 620 (see Fig. 10). The long holes 611a and 623b and the pins 623c and 653c are independent mechanisms for enabling the first operation mechanism 620 and the second operation mechanism 650 to operate independently of each other.

By providing the independent mechanisms in this way, usability can be improved. For example, the brake pedal 22 can be depressed in a braking state shown in Fig. 10 (state where braking force is applied to wheels by operation of parking brake operating portion or the like). Therefore, by releasing the braking state by the electric cylinder 640 while stepping on the brake pedal 22, the rider can brake the wheel using the brake pedal 22 even after the release of the braking state. As a result, it is possible to prevent the tractor 1 from moving without the intention of the rider.

In the present embodiment, not the hydraulic cylinder 624 but the electric cylinder 640 operates along with the operation of the parking brake operating portion or the like. As a result, the wheels can be braked even when the engine 3 is not operated.

In the present embodiment, as shown in Fig. 5, the rod 641 of the electric cylinder 640 is not directly coupled with the equalizer 652, but the rod 641 and the equalizer 652 are coupled through the rotatable first link member 651b and the like. As a result, the operating force, the operating speed, and the like of the brake lever 610 accompanying the expansion and contraction of the electric cylinder 640 can be adjusted. For example, the operating force of the brake lever 610 can be increased by relatively increasing the distance from the rotation shaft 651a to the rod 641. For example, the operating speed of the brake lever 610 can be increased by relatively shortening the distance from the rotation shaft 651a to the rod 641.

Here, there is a case where a difference occurs in the pull-in allowance of the wires 653U and 653D along with a change in the state of the left and right pair of brake mechanisms B, for example. For example, in a case where the right brake mechanism B (brake disc or the like) wears more than the left brake mechanism B, there is a possibility that the pull-in allowance of the upper wire 653U connected to the right brake mechanism B becomes larger than that of the lower wire 653D.

The main body portion 652a of the equalizer 652 rotates about the pin 652d in a case where there is a difference in the pull-in allowance of the wires 653U and 653D. For example, in a case where the pull-in allowance of the upper wire 653U is larger than that of the lower wire 653D, the equalizer 652 rotates about the pin 652d in the counterclockwise direction in left side view. As a result, the difference in the pull-in allowance of the wires 653U and 653D can be absorbed, and the braking force can be uniformly applied to the left and right wheels.

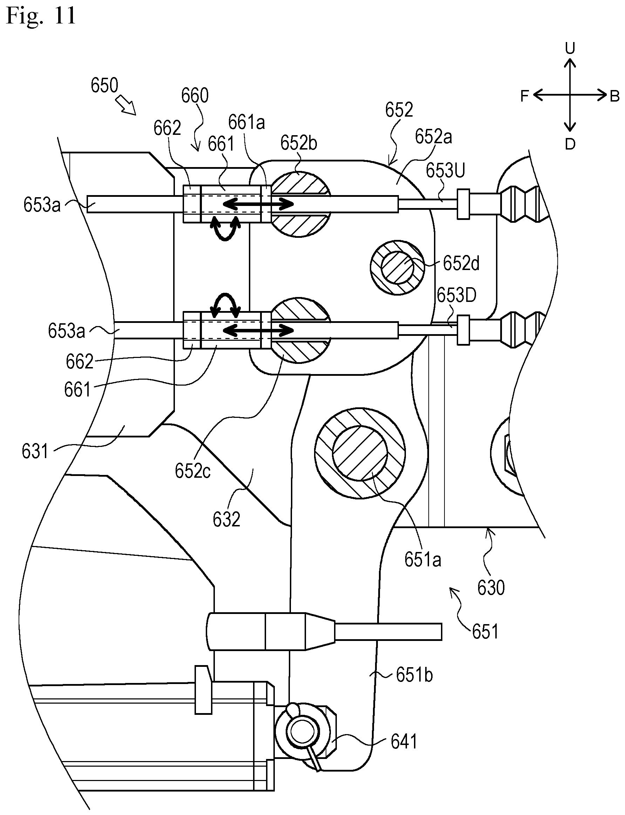

In the present embodiment, the difference in the pull-in allowance of the wires 653U and 653D can be adjusted by using the adjustment mechanism 660. Specifically, when the nuts 662 of the adjustment mechanism 660 shown in Fig. 11 are loosened, the fixation of the high nuts 661 is released.

By rotating the high nuts 661 in this state, the rider can relatively move the male screw portions 653a of the wires 653U and 653D back and forth with respect to the first coupling shaft 652b and the second coupling shaft 652c. By fastening the nuts 662 at a predetermined front-rear position, the wires 653U and 653D can be fixed at the front-rear position. As a result, the adjustment mechanism 660 can change the coupling position of the male screw portions 653a with respect to the first coupling shaft 652b and the second coupling shaft 652c (attachment position of wires 653U and 653D with respect to equalizer 652).

If the pull-in allowance of the upper wire 653U becomes larger than that of the lower wire 653D, the pull-in allowance of the upper wire 653U can be reduced by moving the upper male screw portion 653a forward by the above-described procedure.

The adjustment mechanism 660 is provided in the equalizer 652. With this configuration, since the adjustment mechanism 660 can be installed using the installation space of the equalizer 652, space can be saved. In addition, the adjustment of the wires 653U and 653D and the maintenance of the equalizer 652 can be performed at the same place, and maintainability can be improved.

The equalizer 652 is attached to the support member 630 through the link mechanism 651. By attaching the electric cylinder 640, the link mechanism 651, and the equalizer 652 to a common member (support member 630) in this manner, the electric cylinder 640 and the equalizer 652 can be assembled to the vehicle body in a state of being attached to the support member 630, and workability of the assembling work can be improved.

As described above, the tractor 1 (working vehicle) according to the present embodiment includes: the first operation mechanism 620 (manual operation mechanism) that couples the brake lever 610 capable of actuating the brake mechanism B by being operated in a predetermined direction, the brake pedal 22 (brake operation tool) operable by a rider, and the brake lever 610, and is capable of operating the brake lever 610 along with an operation of the brake pedal 22; the second operation mechanism 650 (electric operation mechanism) that couples the electric cylinder 640 (electric actuator) and the brake lever 610, and is capable of operating the brake lever 610 along with an operation of the electric cylinder 640; and an independent mechanism (long holes 611a and 623b and pins 623c and 653c) that prevents any one of the first operation mechanism 620 and the second operation mechanism 650 from operating along with an operation of the other of the first operation mechanism 620 and the second operation mechanism 650 (see Figs. 2, 9, and 10).

With this configuration, in the tractor 1 including the plurality of operation mechanisms (first operation mechanism 620 and second operation mechanism 650) capable of actuating the brake mechanism B, interference of the operation mechanisms can be prevented.

The first operation mechanism 620 and the second operation mechanism 650 are connected in parallel to the brake lever 610.

With this configuration, interference between the first operation mechanism 620 and the second operation mechanism 650 connected in parallel to the brake lever 610 can be prevented.

The independent mechanism includes: the long hole 623b (manual-side long hole) formed in any one of the second link member 622c (manual-side first member) that operates in conjunction with the brake pedal 22 and the second brake rod 623 (manual-side second member) that operates in conjunction with the brake lever 610; and the pin 623c (manual-side coupling portion) provided in the other of the second link member 622c and the second brake rod 623 and inserted into the long hole 623b (see Figs. 2 and 10).

With this configuration, interference between the plurality of operation mechanisms can be prevented with a simple configuration (long hole 623b).

In addition, the independent mechanism includes the long hole 611a (electric-side long hole) formed in any one of the wires 653U and 653D (electric-side first member) that operate in conjunction with the electric cylinder 640 and the lever body 611 (electric-side second member) that operates in conjunction with the brake lever 610, and the pin 653c (electric-side insertion portion) provided in the other of the wires 653U and 653D and the lever body 611 and inserted into the long hole 611a (see Figs. 2 and 9).

With this configuration, interference between the plurality of operation mechanisms can be prevented with a simple configuration (long hole 611a).

In addition, the independent mechanism includes: the long hole 623b formed in any one of the second link member 622c that operates in conjunction with the brake operation tool and the second brake rod 623 that operates in conjunction with the brake lever 610; the pin 623c provided in the other of the second link member 622c and the second brake rod 623 and inserted into the long hole 623b; the long hole 611a formed in any one of the wires 653U and 653D that operate in conjunction with the electric cylinder 640 and the lever body 611 that operates in conjunction with the brake lever 610; and the pin 653c provided in the other of the wires 653U and 653D and the lever body 611 and inserted into the long hole 611a (See Figs. 2, 9, and 10).

With this configuration, interference between the plurality of operation mechanisms can be prevented with a simple configuration (long hole 611a).

The left and right pair of brake levers 610 are provided so as to correspond to the left and right pair of brake mechanisms B for braking the left and right wheels, respectively, and the second operation mechanism 650 couples one electric cylinder 640 and the left and right pair of brake levers 610 (see Fig. 3).

With such a configuration, the left and right pair of brake mechanisms B can be actuated collectively by one electric cylinder 640.

In addition, the second operation mechanism 650 includes the first link member 651b and the second link member 651c (rotating members) that are rotatable about the rotation shaft 651a according to the driving force of the electric cylinder 640, and the equalizer 652 (distribution portion) that distributes and transmits the driving force (thrust) of the electric cylinder 640 transmitted through the first link member 651b and the second link member 651c to the left and right pair of brake levers 610 (see Figs. 2 and 10).

With this configuration, the operating force and the operating speed of the brake lever 610 by the electric cylinder 640 can be adjusted by appropriately setting the shapes (e.g., dimensions from rotation center to coupling portions with electric cylinder 640 and equalizer 652) of the first link member 651b and the second link member 651c.

The electric cylinder 640 includes the extendable rod 641, and the axial direction (left-right direction) of the rotation shaft 651a is oriented in a direction orthogonal to the extending direction (front-rear direction) of the rod 641 (see Fig. 11).

With such a configuration, the electric cylinder 640 (rod 641), the first link member 651b, and the like can be directly connected without providing a mechanism for converting the transmission direction of the driving force, so that the configuration can be simplified.

As described above, the tractor 1 (working vehicle) according to the present embodiment includes the equalizer 652 (distribution portion) that distributes and transmits the driving force from the electric cylinder 640 (drive source) to the plurality of driving force transmission members (wires 653U and 653D), and the adjustment mechanism 660 that is provided in the equalizer 652 and can adjust the attachment position of the driving force transmission members with respect to the equalizer 652.

With such a configuration, since the equalizer 652 and the adjustment mechanism 660 can be installed in a common space, space can be saved. In addition, maintainability can be improved.

In addition, the equalizer 652 includes the first coupling shaft 652b and the second coupling shaft 652c (coupling portions) with which the driving force transmission members (wires 653U and 653D) are coupled, and the adjustment mechanism 660 includes the high nuts 661 (operation portions) capable of changing the coupling positions of the driving force transmission members with respect to the first coupling shaft 652b and the second coupling shaft 652c by a predetermined operation (see Fig. 11).

With such a configuration, maintainability can be improved.

Furthermore, when the high nuts 661 are rotationally operated, the coupling positions of the driving force transmission members (wires 653U and 653D) with respect to the first coupling shaft 652b and the second coupling shaft 652c can be changed (see Fig. 11).

With such a configuration, the coupling position can be adjusted by a simple operation, and maintainability can be improved.

In addition, the driving force transmission member is configured by the wires 653U and 653D, the high nuts 661 are attached to the wires 653U and 653D inserted through the first coupling shaft 652b and the second coupling shaft 652c, and the coupling positions of the wires 653U and 653D with respect to the high nuts 661 can be changed by changing the attachment positions of the wires 653U and 653D in the axial direction (see Fig. 11).

With such a configuration, the adjustment mechanism 660 can have a simple configuration.

Furthermore, the equalizer 652 includes the main body portion 652a that supports the first coupling shaft 652b and the second coupling shaft 652c and is rockable about the rocker shaft 622a, and the high nut 661 is disposed so as to protrude outward from an outer edge portion of the main body portion 652a (see Fig. 11).

With such a configuration, the main body portion 652a is less likely to become an obstacle at the time of adjusting the attachment position, and the adjustment work can be efficiently performed. Accordingly, maintainability can be improved.

The drive source is the electric cylinder 640 (electric actuator), and the driving force transmission members (wires 653U and 653D) transmit the driving force distributed by the equalizer 652 to the brake mechanisms B of the left and right wheels (see Figs. 2 and 3).

With this configuration, maintainability can be improved in the mechanism (second operation mechanism 650) that couples the electric cylinder 640 and the brake mechanism B.

The tractor 1 further includes the cover member 670 that covers the equalizer 652 from at least one of the left and right sides (see Fig. 7).

With such a configuration, it is possible to prevent mud or the like from adhering to the equalizer 652 or the adjustment mechanism 660.

The equalizer 652 is disposed between the front wheels 6 and the rear wheels 7 in the front-rear direction.

With such a configuration, the front wheels 6 and the like are less likely to become an obstacle at the time of adjusting the attachment position, and maintainability can be improved.

The equalizer 652 is disposed in front of the fuel tank 23 in the front-rear direction.

With such a configuration, the fuel tank 23 is less likely to become an obstacle at the time of adjusting the attachment position, and maintainability can be improved.

Note that the tractor 1 according to the present embodiment is an embodiment of a working vehicle.

The brake pedal 22 according to the present embodiment is an embodiment of a brake operation tool.

The first operation mechanism 620 according to the present embodiment is an embodiment of a manual operation mechanism.

The electric cylinder 640 according to the present embodiment is an embodiment of an electric actuator and a drive source.

The second operation mechanism 650 according to the present embodiment is an embodiment of an electric operation mechanism.

The long holes 623b and 651a and the pins 623c and 653c according to the present embodiment are an embodiment of an independent mechanism.

The second link member 622c according to the present embodiment is an embodiment of the manual-side first member.

The second brake rod 623 according to the present embodiment is an embodiment of a manual-side second member.

The long hole 623b according to the present embodiment is an embodiment of a manual-side long hole.

The pin 623c according to the present embodiment is an embodiment of the manual-side coupling portion.

The wires 653U and 653D according to the present embodiment are an embodiment of the electric-side first member and the driving force transmission member.

The lever body 611 according to the present embodiment is an embodiment of an electric-side second member.

The long hole 611a according to the present embodiment is an embodiment of an electric-side long hole.

The pin 653c according to the present embodiment is an embodiment of an electric-side coupling portion.

The first link member 651b and the second link member 651c according to the present embodiment are an embodiment of a rotating member.

The equalizer 652 according to the present embodiment is an embodiment of a distribution portion.

The first coupling shaft 652b and the second coupling shaft 652c according to the present embodiment are an embodiment of a coupling portion.

The high nut 661 according to the present embodiment is an embodiment of an operation portion.

While the embodiment of the present invention has been described above, the present invention is not limited to the above configuration, and various modifications can be made within the scope of the invention described in the claims.

For example, the working vehicle according to the present embodiment is the tractor 1, but the type of the working vehicle according to the present invention is not limited thereto. The working vehicle according to the present invention may be another agricultural vehicle, construction vehicle, industrial vehicle, or the like.

Furthermore, in the present embodiment, the brake lever 610 is operated by the electric cylinder 640, but the type of the electric actuator is not limited to the electric cylinder 640, and may be another device (electric motor or the like) powered by electricity.

In the present embodiment, the long hole 623b is formed in the second brake rod 623 (see Fig. 2), but the member in which the long hole 623b is formed is not limited to the second brake rod 623. The long hole 623b may be formed in any path through which the operating force is transmitted from the brake pedal 22 to the brake lever 610. For example, the long hole 623b may be formed in the first brake rod 621, the second link member 622c, and the like.

In the present embodiment, the long hole 611a is formed in the lever body 611, but the member in which the long hole 611a is formed is not limited to the lever body 611. The long hole 611a may be formed in any path through which the thrust is transmitted from the electric cylinder 640 to the brake lever 610. For example, the long hole 611a may be formed in the attachment portion 653b of the wires 653U and 653D.

In the present embodiment, the first operation mechanism 620 and the second operation mechanism 650 operate independently of each other by the long holes 623b and 611a and the pins 623c and 653c, but the configuration of the mechanism (independent mechanism) that causes the operation mechanisms 620 and 650 to operate independently is not limited to the long holes 623b and 611a and the pins 623c and 653c.

The independent mechanism is configured by a part (long hole 623b, pin 653c, and the like) of the first operation mechanism 620 and the second operation mechanism 650, but may be configured by a member different from the operation mechanisms 620 and 660.

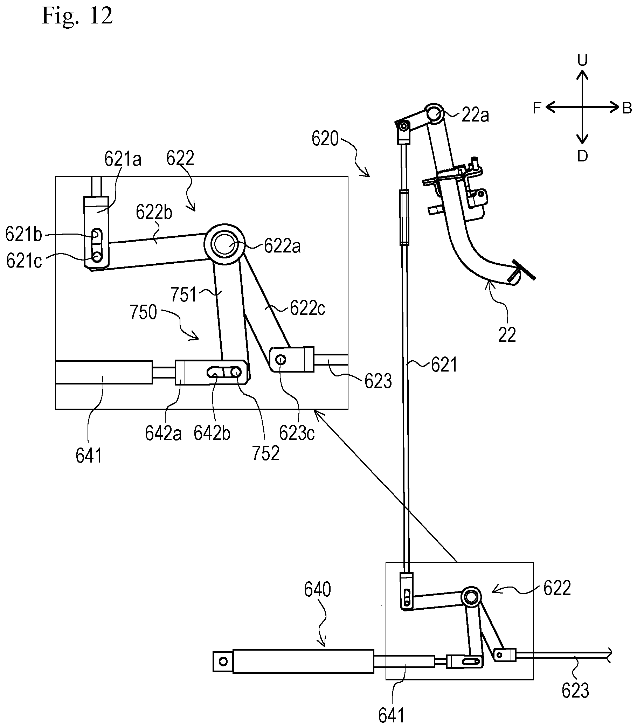

In the present embodiment, the left and right pair of brake levers 610 are operated by one electric cylinder 640, but the correspondence relationship between the electric cylinder 640 and the brake lever 610 is not limited thereto. For example, the left and right pair of brake levers 610 can be operated by left and right electric cylinders 640. Hereinafter, an example of the configuration will be described with reference to Fig. 12.

A left and right pair of electric cylinders 640 shown in Fig. 12 are provided so as to correspond to the left and right pair of brake levers 610. Note that in Fig. 12, of the left and right pair of electric cylinders 640, only the left electric cylinder 640 and the left operation mechanism (first operation mechanism 620 and the like) are shown, but actually, the right electric cylinder 640 and operation mechanism are disposed on the right side (e.g., right side of vehicle body) of the left electric cylinder 640. Hereinafter, the configuration of the electric cylinder 640 will be described using the left electric cylinder 640 as an example. The electric cylinder 640 is disposed such that the rod 641 faces rearward. A plate-shaped attachment portion 642a is formed at a distal end portion of the rod 641. A long hole 642b having a substantially arc shape in side view with the rocker shaft 622a as the center is formed in the attachment portion 642a.

A left and right pair of second operation mechanisms 750 are provided, and couple the left and right pair of electric cylinders 640 and the left and right pair of link mechanisms 622. The second operation mechanism 750 includes a coupling member 751. The coupling member 751 is formed in a plate shape with plate surfaces facing the left-right direction, and is rockably supported by the rocker shaft 622a. The first link member 622b, the second link member 622c, and the coupling member 751 are rockable as one unit.

The coupling member 751 and the rod 641 are coupled to each other by inserting a pin 752 into the coupling member 751 and the long hole 642b of the attachment portion 642a. The long hole 642b may be formed in the coupling member 751 instead of the electric cylinder 640.

The first brake rod 621 is coupled with the first link member 622b through a long hole 621b. In Fig. 12, the long hole 621b is formed in an attachment portion 621a of the first brake rod 621, and a pin 621c is inserted into the long hole 621b and the first link member 622b. Note that the long hole 621b may be formed in the first link member 622b instead of the first brake rod 621.

The second brake rod 623 is coupled with the second link member 622c not through a long hole.

According to the configuration shown in Fig. 12, when the brake pedal 22 is operated, the second link member 622c can be rocked along with the rocking of the first link member 622b. At this time, since the pin 752 inserted into the coupling member 751 and the long hole 642b of the rod 641 slide, transmission of power from the brake pedal 22 to the electric cylinder 640 is cut off. Furthermore, when the rod 641 expands and contracts, the second link member 622c can be rocked along with the rocking of the coupling member 751. At this time, since the pin 621c inserted into the first link member 622b and the long hole 621b of the first brake rod 621 slide, transmission of power from the electric cylinder 640 to the brake pedal 22 is cut off.

As described above, even in a case where the left and right pair of electric cylinders 640 are provided corresponding to the left and right pair of brake mechanisms B, respectively, the first operation mechanism 620 and the second operation mechanism 650 can be operated independently by the long holes 621b and 642b and the pins 621c and 752.

In addition, by controlling the left and right electric cylinders 640 separately, it is also possible to provide a function as the hydraulic cylinder 624 (see Fig. 2) of the present embodiment. For example, in a case where the tractor 1 is turned to the left, the rod 641 of the left electric cylinder 640 is contracted to actuate the left brake mechanism B. As a result, the left wheel is braked, and the turning diameter of the tractor 1 can be reduced. According to this configuration, the hydraulic cylinder 624 can be omitted.

As described above, the left and right pair of brake levers 610 are provided so as to correspond to the brake mechanisms B of the left and right wheels, respectively, and two second operation mechanisms 650 are provided so as to correspond to the left and right pair of brake levers 610.

With such a configuration, the second operation mechanism 650 can be used as a single-brake mechanism for turning the tractor 1.

The adjustment mechanism 660 adjusts the attachment positions of the wires 653U and 653D by the high nuts 661 (see Fig. 11), but it is also possible to adjust the attachment positions of the wires 653U and 653D by members different from the high nuts 661.

The electric cylinder 640, the equalizer 652, and the wires 653U and 653D are used for actuating the brake mechanism B, but the electric cylinder 640 and the like can also be used for applications other than the brake.

Furthermore, in the present embodiment, an example of distributing the thrust of the electric cylinder 640 has been described as the application of the equalizer 652, but the equalizer 652 can also be used for other applications. For example, the equalizer 652 can be used for any purpose such as a purpose of distributing power of an electric motor, an operating force of an operation tool by a rider, and the like.

In the present embodiment, the driving force is distributed from the equalizer 652 to the wires 653U and 653D, but the member to which the driving force is distributed from the equalizer 652 is not limited to the wires 653U and 653D. For example, the driving force may be distributed from the equalizer 652 to a rod or the like.

The equalizer 652 is disposed between the front wheels 6 and the rear wheels 7 in the front-rear direction, but the positional relationship with the front wheels 6 and the rear wheels 7 in the front-rear direction is not limited to that in the present embodiment. The equalizer 652 is disposed in front of the fuel tank 23, but the positional relationship with the fuel tank 23 in the front-rear direction is not limited to that in the present embodiment.

The high nut 661 protrudes forward from the main body portion 652a of the equalizer 652, but the protruding direction with respect to the main body portion 652a is not limited to the forward direction, and may protrude in other directions. The high nut 661 does not necessarily protrude from the main body portion 652a.

The high nut 661 is coupled with the first coupling shaft 652b and the second coupling shaft 652c, but may be coupled with a member (such as main body portion 652a) other than the first coupling shaft 652b and the second coupling shaft 652c.

The cover member 670 covers the adjustment mechanism 660 and the like from the upper side, the lower side, the front side, the rear side, and the left side, but the cover member 670 only needs to cover the adjustment mechanism 660 and the like from at least one of the left and right sides. The cover member 670 may be omitted.

### INDUSTRIAL APPLICABILITY

The present invention is applicable to a working vehicle.

### REFERENCE SIGNS LIST

1: Tractor
22: Brake pedal
610: Brake lever
611a, 623b: Long hole
620: First operation mechanism
623c, 653c: Pin
640: Electric cylinder
650: Second operation mechanism
B: Brake mechanism

## Claims

1. A working vehicle comprising:
a brake lever capable of actuating a brake mechanism by being operated in a predetermined direction;
a manual operation mechanism that couples a brake operation tool operable by a rider and the brake lever and is capable of operating the brake lever along with an operation of the brake operation tool;
an electric operation mechanism that couples an electric actuator and the brake lever and is capable of operating the brake lever along with an operation of the electric actuator; and
an independent mechanism that prevents operation of any one of the manual operation mechanism and the electric operation mechanism along with an operation of the other of the manual operation mechanism and the electric operation mechanism.

2. The working vehicle according to claim 1, wherein
the manual operation mechanism and the electric operation mechanism are connected to the brake lever in parallel.

3. The working vehicle according to claim 1, wherein
the independent mechanism includes
a manual-side long hole formed in any one of a manual-side first member that operates in conjunction with the brake operation tool and a manual-side second member that operates in conjunction with the brake lever, and
a manual-side coupling portion provided in the other of the manual-side first member and the manual-side second member and inserted into the manual-side long hole.

4. The working vehicle according to claim 1, wherein
the independent mechanism includes
an electric-side long hole formed in any one of an electric-side first member that operates in conjunction with the electric actuator and an electric-side second member that operates in conjunction with the brake lever, and
an electric-side coupling portion provided in the other of the electric-side first member and the electric-side second member and inserted into the electric-side long hole.

5. The working vehicle according to claim 1, wherein
the independent mechanism includes:
a manual-side long hole formed in any one of a manual-side first member that operates in conjunction with the brake operation tool and a manual-side second member that operates in conjunction with the brake lever;
a manual-side coupling portion provided in the other of the manual-side first member and the manual-side second member and inserted into the manual-side long hole;
an electric-side long hole formed in any one of an electric-side first member that operates in conjunction with the electric actuator and an electric-side second member that operates in conjunction with the brake lever; and
an electric-side coupling portion provided in the other of the electric-side first member and the electric-side second member and inserted into the electric-side long hole.

6. The working vehicle according to any one of claims 1 to 5, wherein
a left and right pair of the brake levers are provided so as to correspond to a left and right pair of the brake mechanisms for braking left and right wheels, respectively, and
the electric operation mechanism couples one electric actuator and the left and right pair of brake levers.

7. The working vehicle according to claim 6, wherein
the electric operation mechanism includes
a rotating member that is rotatable about a rotation axis according to a driving force of the electric actuator, and
a distribution portion that distributes and transmits the driving force of the electric actuator transmitted through the rotating member to the left and right pair of brake levers.

8. The working vehicle according to claim 7, wherein
the electric actuator includes an extendable rod, and
an axial direction of the rotation axis is oriented in a direction orthogonal to an extending direction of the rod.

9. The working vehicle according to claim 1, wherein
a left and right pair of the brake levers are provided so as to correspond to brake mechanisms of left and right wheels, respectively, and
two electric operation mechanisms are provided so as to correspond to the left and right pair of brake levers.
